# EUROPEAN PATENT SPECIFICATION

(11) **EP 2 727 682 B1**
(45) Date of publication and mention of the grant of the patent: **05.07.2017**
(21) Application number: 12191313.1
(22) Date of filing: 05.11.2012
(51) Int. Cl.: B23P 21/00, B23Q 5/40, F16H 25/12, F16H 25/20, B23Q 1/46, B67B 3/20

(54) **Industrial automation device**
Industrielle Automatisierungsvorrichtung
Dispositif d'automatisation industrielle

(43) Date of publication of application: 07.05.2014
(73) Proprietor: Telerobot S.p.A., 16153 Genova (IT)
(72) Inventor: Becchi, Francesco, 16153 Genova GE (IT); Scarrone, Mario, 16153 Genova GE (IT)
(74) Representative: Lunati & Mazzoni S.r.L.

(56) References cited:
- EP-A1- 0 292 056
- EP-A1- 1 338 372
- WO-A1-2005/007556
- WO-A1-2011/137882
- CH-A5- 586 583
- DE-A1- 3 938 353
- DE-A1- 4 113 629
- DE-A1- 10 354 395
- DE-A1-102007 057 857
- GB-A- 2 129 409
- JP-A- 5 332 416
- US-A- 5 647 245
- US-A1- 2002 148 299
- US-A1- 2010 218 647

## Description

Subject of the present invention is an industrial automation device of the type specified in the preamble of the first claim. Closest prior art WO-A-2011/137882 discloses such an industrial automation device. In particular, the invention concerns a device able to support or replace an operator, by performing predefined operations in an industrial production and/or assembly process. In particular, the invention concerns a manipulator, i.e. a device apt to handle, assemble or move objects. More particularly, it is provided with a plurality of handling devices, called spindles, being mutually independent and each apt to perform the same sequence of operations representing the scope of the machine or a subassembly of such operations.

Similar devices are disclosed in patent applications DE-A-102007057857; WO-A-2005/007556; GB-A-2129409A; EP-A-1338372; US-A-2010218647; US-A-2002148299; DE-A-10354395; DE-A-4113629; CH-A-586583; JP-A-5332416; US-A-5647245; EP-A-0292056 and DE-A-3938353. The last four documents disclose spindle drives for selective linear and rotary movements, wherein the spindle comprises opposite threads. It is known in the industrial production that two different types of automated plants are identified: plants with high flexibility, in which a manipulator or a series of manipulators perform by means of various aids a programmable assembly sequence, and plants with high throughput, in which a manipulation system mainly working with mechanical, hydraulic or pneumatic actuation, performs a given sequence of preset operations, through a series of rigid configurations of the machine by means of mechanical cams.

A particular type of plants of this second category consists in a cyclic assembling machines with multiple spindles. In this type of machines a plurality of devices, just called spindles, performs a series of operations with a plurality of spindles and these sequentially perform the same task on subsequent pieces produced, with the corresponding advantage that very high production throughputs can be obtained. The preferred configuration of this type of plants is the so-called carousel, the spindles rotating around a main axis. From these basic configurations other compositions can be derived, in which the machine is a composition of carousels or machines in which the composition of the spindles occurs differently, as for example along a mechanical transmission chain, the main advantage of this further version consisting in the possibility of getting more freedom for exploiting the layout of the machine as seen from above.

With further reference to the machines having high working throughput with multiple spindles, the following important limits are found.

The first limit concerning these machines is the reduced or zero possibility of program reconfiguration.

Another important drawback of the known industrial automation devices is represented by the high complexity of construction: the high speeds and precisions required at assembling with high throughput require a very strong and accurate mechanical solution with a delicate and modifiable set-up, just by directly acting on the different regulations and calibrations.

Finally, it is generally known that this type of devices permits the possible calibration of the sequence of the machine during the calibration phase, but that such calibrations are generally fixed up to the subsequent calibration operation and in any case they cannot be continuously regulated with the machine in operation.

In this situation, the technical task of the present invention is to realize an industrial automation device, apt to substantially obviate the cited drawbacks.

Within said technical task, an important aim of the invention is to realize an industrial automation device with high flexibility.

Another important aim of the invention is to provide a device being characterized by high reliability.

Another important aim is to obtain a device being easily regulated, in order to be rapidly adapted to any working condition.

The technical task and the specified aims are obtained by an industrial automation device, as claimed in the annexed claim 1.

Preferred embodiments are pointed out in the subclaims.

The characteristics and advantages of the invention are explained in the following by the detailed description of a preferred embodiment of the invention, with reference to the annexed drawings, in which:
**Fig. 1** shows an industrial automation device;
**Fig. 2** points up a detail of the industrial automation device according to the invention.

With reference to the cited figures, the industrial automation device according to the invention is globally indicated with number 1. It is apt to support or replace an operator in an industrial production process, by performing predefined operations such as for example, gripping, handling and assembling. The industrial automation device 1 can therefore be preferably identified with a manipulator, apt to handle at the same time and mutually independently a plurality of objects, such as to permit their assembly on a base group.

In particular, the industrial automation device 1 is a manipulator for objects made of complex bottle caps, more particularly special caps such as those for the base groups made of cardboard, such as cartons and similar or for liquors, which need particular working.

The industrial automation device 1 mainly comprises one or more handling groups **20**, each of them being apt to handle the object to assemble; and a support structure **30** apt to support the handling groups 20 and the base groups on which the objects can be held, for example a flange with a cap interface with respect to the bottle or carton.

The support structure 30 comprises a central support **31**, preferably with a cylindrical shape, apt to support a plurality of handling groups 20; a workstation **32** apt to handle the base groups along a production line **32a** with integral motion; and a loading station, not shown in the figure, apt to store said objects, permitting their withdrawal by means of the handling groups 20.

Furthermore, the support structure 30 has a sliding unit **33** integral with handling groups 20 and movable with respect to the central support 31, such as to move the handling groups 20 along a preferably closed path **33a**, at least partially coincident with said production line 32a. Preferably, the closed path 33a is substantially circular and the handling speed of the groups 20 and so of the objects to be handled, is substantially equal to that of the base assemblies, defined by the workstation 32.

With reference to unit 33, the industrial automation device 1 has at least one handling group 20 apt to move an object, by defining a handling direction **20a** being preferably substantially transversal, and more preferably being substantially perpendicular to the deposition plane of the production line 32a and still more preferably, being substantially parallel to the gravity gradient.

In particular, the industrial automation device 1 advantageously has a plurality of handling groups 20, which define handling directions 20a, preferably and substantially parallel one another.

Each handling group 20 comprises at least one moving element **21** apt to grip and handle an object and handling and translating means, apt to handle and translate at least one moving element 21, apt in particular to permit the independent control of the rotation and translation in terms of position, speed and acceleration.

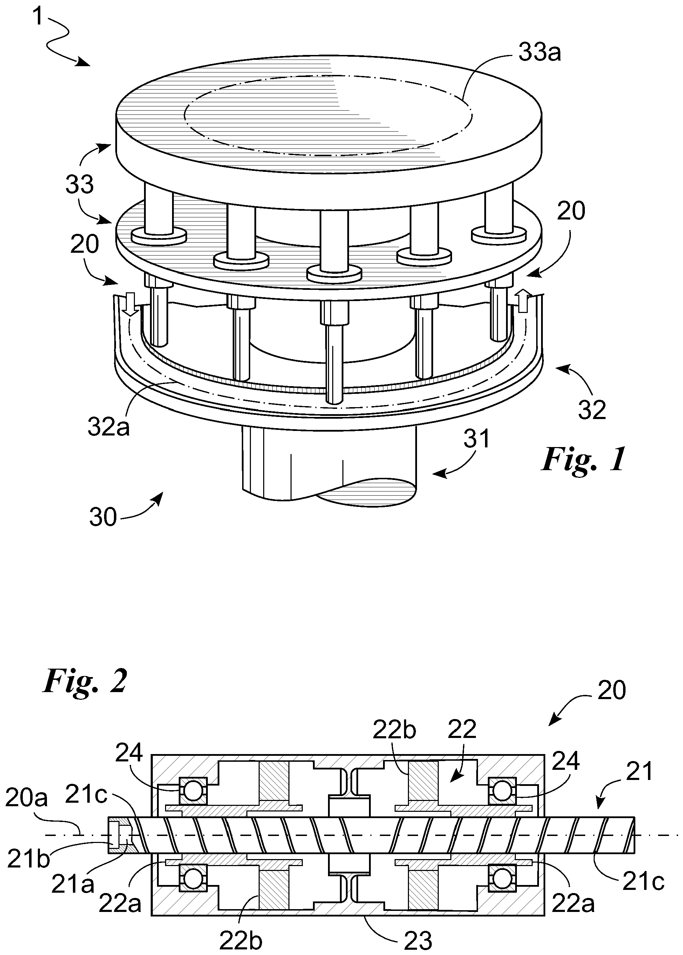

In a preferred embodiment of an example shown in Fig. 2, the handling group 20 comprises one or more moving element 21; a handling apparatus **22**, apt to handle the moving elements 21; a frame **23** apt to be bound to the sliding unit 33 and to define a housing for means 22 and for at least one part of the element 21; and bushes **24** or other similar elements, apt to permit to the moving element 21 to translate and/or slide with respect to the frame 23.

Each moving element 21 can be identified in a profile or other similar element, defining a substantially linear extending direction and preferably, substantially parallel to the sliding direction 20a.

Furthermore, it has an inner cavity **21a**, preferably a through hole, provided, at its lower end, i.e. near the station 31, of a seat **21b**, shaped in order to house at least one portion of the cap or the object to handle.

The inner cavity 21a is connected with a fluid passage with a pump or another similar device, apt to change the pressure in the seat 21 b and, preferably housed in the frame 23. More particularly, the pump is apt to define a withdrawal/transport operation, in which the inner cavity 21 a and the seat 21 b are kept in such a depression as to return or bind the cap to the seat 21 b, and a releasing action, in which the pressure in the inner cavity 21 a and in the seat 21 b is higher, permitting to the cap to exit from the seat 21 b, substantially due to its weight.

Alternatively or in addition to the inner cavity 21 a, the element 21 can have gripping means, not shown in terms of measure, identifiable as a gripper, a spindle or another gripping means, apt to perform a mechanical gripping of at least one object.

Preferably, such an organ is apt to perform a gripping operation according to a predetermined position of the object, with respect to the same means, i.e. by placing the gripped object in a determined position.

The handling means 22, as described later, define for the moving element 21 a rotation, substantially around its handling direction 20a and with a translation substantially parallel to the direction 20a.

Therefore, they comprise one or more engaging bodies **22a** apt to engage with threads **21c** suitably made along the outer lateral surface 21 and at least one motor **22b** apt to rotate the engaging bodies 22a around its direction 20a by varying, in a mutual independent way, at least with the direction of rotation.

The engaging bodies 22a can be identified as nuts, and preferably nuts with a recirculation of spheres, i.e. having spheres interposed between the thread 21 c of the moving element 21 and the thread of the engaging bodies 22a.

The motor 22b can control a mode in the same direction of the engaging bodies 22a, defining a rotation of each moving element 21 substantially in the handling direction 20a. Alternatively, it could control mutually opposed rotations of the bodies 22a, by imposing a translation of the element 21 substantially along the handling direction 20a and causing the rotation of the moving element 21.

Preferably, the engaging bodies 22a are apt to rotate, apart from varying their rotary direction, with a substantially different module speed, so that the moving element 21 can perform a rotary translation with respect to the handling direction 20a with a rotary and translation speed which is variable with respect to the bodies 22a.

In order to permit such an independent handling of the engaging bodies 22a, each of the handling means 22 have two motors 22b, each of them associated with one of the engagement bodies 22a.

Alternatively, the handling means 22 have a single motor 22b, provided with a gear or other similar cinematic element, apt to modify the transmission relationship between the motor 22b and each body 22a, in particular the reverse portion, and more particularly the module of the rotation speed of the bodies 22a.

The motors 22b are, preferably, electrical and more preferably, they are brushless motors.

The operation of an industrial automation device, which was described previously in a structural way, is the following.

First of all, the working station 32 and the sliding unit 33 respectively move the base groups along the production line 32a and the handling assemblies 20 along the closed path 33a. In detail, said movements are continuous i.e. without interruption, and preferably with substantially mutual advancing speeds.

During such movement, the unit 33 places a handling group 20 at the loading station, so permitting the withdrawal of an object by said handling group 20 and by performing the required work. Said withdrawal takes place by means of the inner cavity 21 a, maintained in a depression condition so as to return and bind the cap in the seat.

In particular, if the motors 22b rotate the engagement bodies 22a with a rotation speed having the same module and an opposed direction, the moving element 21 translates along the handling direction 20a. More particularly, the bodies 22a, by rotating with respect to the moving element 21, generate on the latter four distinct forces: two tangential forces with respect to the element 21 and being substantially mutually opposed, so as to cancel each other; and two axial forces, i.e. in practice parallel to the substantially equal direction 20a, so as to translate the moving element 21 along the handling direction 20a.

On the contrary, if the motors 22b rotate the engaging bodies 22a with a substantially equal speed and rotation directions, the moving element 21 rotates with respect to the handling direction 20a. In particular, the engaging bodies 22a, having a speed with substantially the same direction and the same module, impose to the moving element 21 four forces: two tangential forces, substantially and mutually equal so as to apply on the element 21 a shift and so a rotation substantially along the handling direction 20a; and two axial forces substantially and mutually opposed, and which, therefore cancel each another.

Furthermore and as an alternative, if a rotary translation of the moving element 21 is required, with respect to the handling direction 20a, the motors 22b rotate the engagement bodies 22a with substantially different speeds. In detail, in this case the engagement bodies 22a impose to the element 21 two tangential forces and two axial forces which respectively determine a shift/rotation with respect to the handling direction 20a, and at the same time, a translation along the direction 20a.

The invention permits important advantages.

A first important advantage of the industrial automation device 1 is represented by the high simplicity of construction.

As a matter of fact, despite the presence of a high number of handling groups 20, the industrial automation device is characterized by a reduced number of components, thanks to the new cinematic element of the groups 20.

Another advantage is therefore represented by the high reliability and so by the reduced number of maintenance operations or failure of the device 1.

Another advantage is therefore represented by reduced times and production costs, which can be obtained thanks to the industrial automation device 1.

Said advantages are furthermore highlighted by the use of engagement bodies 22a with the recirculation of spheres which guarantee high precision and long operating life.

An important advantage is also represented by the fact that, thanks to the particular cinematic element recognised by each handling organ 20, the device 1 cab be easily regulated, and so it is able to adapt its own operation to the assembly needs.

In particular, by varying the speed and the acceleration of the engagement bodies 22a, it is possible not only to modify the movement of the moving element 21 as before, but also to modify the strength or the assembly mode and, so realizing the assembly both of particularly delicate and fragile components and permitting the connection with other assemblies which need a high strength application.

Such an advantage is particularly important in manipulators and above all in manipulators with bottle caps, in more detail special caps such as those for cardboard envelopes, such as cartons or similar for liquors, which need particular working, and pairs with variable strengths inside the same operation.

In fact, by means of a suitable regulation of the rotation speed of the bodies 22a it is possible to regulate the stroke and the strength performed by the handling group 20 and therefore, to adapt the operation of the device 1 to the specified properties.

Such flexibility and precision of working of the device are further increased by the use of motors 22b of brushless type and by engagement bodies 22a with a recirculation of spheres, obtaining a great precision of movements of the moving element 21.

## Claims

1. An industrial automation device (1) comprising a plurality of handling groups (20) apt to handle an object, in a handling direction (20a); a support structure (30) apt to support and handle said handling groups (20); wherein each of said handling groups (20) comprises at least one moving element (21) apt to handle said object; handling and translating means of said moving element (21) apt to permit the independent control of its rotation and translation, in terms of position, speed and acceleration **characterized in that** said at least one moving element (21) comprises two mutually opposed threads (21 c), and in which each one of said handling groups (20) also comprises at least two engaging bodies (22a), each of them being apt to engage with one of said threads (21 c); and at least one motor (22b) apt to rotate said engagement bodies (22a); said at least one motor (22b) being able to mutually vary at least the rotary direction of said at least two engagement bodies (22a) by defining, for said at least one moving element (21), a rotation substantially around said handling direction (20a) when said at least two engagement bodies (22a) have the same rotary directions and a translation substantially along said handling direction (20a) when said at least two engagement bodies (22a) have opposed rotary directions; **in that** said at least one motor (22b) is able to mutually vary the module of the rotation speeds of said at least two engagement bodies (22a) by defining a rotary translation of said at least one moving element (21) with respect to said handling direction (20a), when said rotation speed of said at least two engagement bodies (22a) has a different module; **in that** each of said handling groups (20) comprises two of said engagement bodies (22a) and two of said motors (22b), each of them being associated to one of said engaging bodies (22a); and **in that** said at least one motor (22b) is brushless and **in that** said at least one moving element (21) has an inner cavity (21 a) apt to permit the withdrawal of said object according to a depression phase.

2. An industrial automation device (1) according to one or more preceding claims, in which said at least two engaging bodies (22a) have a recirculation of spheres.

3. An industrial automation device (1) according to one or more preceding claims, in which said handling groups (20) define handling directions (20a) substantially parallel each other.

4. An industrial automation device (1) according to one or more preceding claims, in which at least one moving element (21) has a substantially linear extending direction.

5. An industrial automation device (1) according to preceding claim, in which said linear extending direction is substantially parallel to the sliding direction (20a).

## Patentansprüche

1. Industrielle Automatisierungsvorrichtung (1), umfassend eine Vielzahl an Bewegungsgruppen (20), die geeignet sind, einen Gegenstand in eine Bewegungsrichtung (20a) zu bringen; eine tragende Struktur (30), die geeignet ist, die genannten Bewegungsgruppen (20) zu tragen und zu bewegen; bei der jede der genannten Bewegungsgruppen (20) mindestens ein Manövrierelement (21) umfasst, das geeignet ist, den genannten Gegenstand zu bewegen; Mittel zur Bewegung und Mittel zur Verschiebung des genannten Manövrierelements (21), die geeignet sind, die unabhängige Steuerung der jeweiligen Drehung und Verschiebung in Hinblick auf Position, Geschwindigkeit und Beschleunigung zu gestatten, **dadurch gekennzeichnet, dass** das genannte mindestens ein Manövrierelement (21) zwei gegenüberliegende Gewinde (21 c) umfasst und dadurch, dass die genannte jeweilige Gruppe der genannten Bewegungsgruppen (20) außerdem mindestens zwei Verbindungskörper (22a) umfasst, von denen jeder geeignet ist, sich mit nur einem der genannten Gewinde (21 c) zu verbinden; und mindestens einen Motor (22b), der geeignet ist, um die genannten Verbindungskörper (22a) zu drehen; wobei der mindestens eine Motor (22b) geeignet ist, gegenseitig jeweils die Drehrichtung der genannten mindestens zwei Verbindungskörper (22a) zu variieren und so für das genannte mindestens eine Manövrierelement (21) eine im Wesentlichen um die genannte Bewegungsrichtung (20a) erfolgende Drehung zu definieren, wenn die genannten mindestens zwei Verbindungskörper (22a) die gleichen Drehrichtungen aufweisen und eine Verschiebung im Wesentlichen entlang der genannten Bewegungsrichtung (20a), wenn die genannten mindestens zwei Verbindungskörper (22a) entgegengesetzte Drehrichtungen aufweisen; dadurch, dass der genannte mindestens eine Motor (22b) geeignet ist, gegenseitig das Geschwindigkeitsmodul der Drehgeschwindigkeit der genannten mindestens zwei Verbindungskörper (22a) zu ändern und so eine Drehverschiebung des genannten mindestens einen Manövrierelements (21) im Verhältnis zu der genannten Bewegungsrichtung (20a) zu definieren, wenn die Drehgeschwindigkeiten der genannten mindestens zwei Verbindungskörper (22a) ein unterschiedliches Modul aufweisen; dadurch, dass jede der genannten Bewegungsgruppen (20) die beiden genannten Verbindungskörper (22a) und die beiden genannten Motoren (22b) umfasst, von denen jeder einem der genannten Verbindungskörper (22a) zugeordnet ist; und dadurch, dass der genannte mindestens eine Motor (22b) bürstenlos ist, dadurch, dass das genannte mindestens eine Manövrierelement (21) einen inneren Hohlraum (21 a) aufweist, der geeignet ist, die Entnahme des genannten Gegenstands durch Unterdruck zu gestatten.

2. Industrielle Automatisierungsvorrichtung (1) nach einem oder mehreren der vorangegangenen Ansprüche, bei der die mindestens zwei Verbindungskörper (22a) mit Kugelumlauf ausgestattet sind.

3. Industrielle Automatisierungsvorrichtung (1) nach einem oder mehreren der vorangegangenen Ansprüche, bei der die genannten Bewegungsgruppen (20) jeweils eine Bewegungsrichtung (20a) definieren, wobei die genannten Bewegungsrichtungen (20a) im Wesentlichen zueinander parallel sind.

4. Industrielle Automatisierungsvorrichtung (1) nach einem oder mehreren der vorangegangenen Ansprüche, bei der das genannte mindestens eine Manövrierelement (21) einen im Wesentlichen geradlinigen Verlauf aufweist.

5. Industrielle Automatisierungsvorrichtung (1) nach dem vorangegangenen Anspruch, bei dem die genannte lineare Verlaufsrichtung im Wesentlichen parallel zur Laufrichtung (20a) ist.

## Revendications

1. Dispositif d'automatisation industrielle (1) comprenant une pluralité de groupes d'actionnement (20) destinés à mettre en mouvement un objet dans une direction d'actionnement (20a) ; une structure porteuse (30) destinée à soutenir et à mettre en mouvement lesdits groupes d'actionnement (20) ; où chacun desdits groupes d'actionnement (20) comprend au moins un élément de manoeuvre (21) destiné à mettre en mouvement ledit objet ; des moyens d'actionnement et des moyens de translation dudit élément de manoeuvre (21) destinés à permettre le contrôle indépendant de leur propre rotation et translation en termes de position, vitesse et accélération, **caractérisé en ce que** ledit élément de manoeuvre (21) comprend deux filetages (21 c) opposés l'un par rapport à l'autre, et où chacun desdits groupes d'actionnement (20) comprend également au moins deux corps d'engagement (22a) chacun desquels étant destiné à s'engager sur un seul desdits filetages (21c) ; et au moins un moteur (22b) destiné à faire tourner lesdits corps d'engagement (22a) ; ledit moteur (22b) étant destiné à varier, réciproquement, au moins le sens de rotation desdits deux corps d'engagement (22a) définissant, pour ledit au moins un élément de manoeuvre (21), une rotation essentiellement autour de ladite direction d'actionnement (20a) quand lesdits au moins deux corps d'engagement (22a) ont les mêmes sens de rotation, et une translation essentiellement le long de ladite direction d'actionnement (20a) quand lesdits au moins deux corps d'engagement (22a) ont des sens de rotation opposés ; par le fait que ledit moteur (22b) est destiné à varier, réciproquement, le module de la vitesse de rotation desdits au moins deux corps d'engagement (22a) définissant une roto-translation dudit au moins un élément de manoeuvre (21) par rapport à ladite direction d'actionnement (20a) quand lesdites vitesses de rotation desdits au moins deux corps d'engagement (22a) ont un module différent ; par le fait que chacun desdits groupes d'actionnement (20) comprend deux desdits corps d'engagement (22a) et deux desdits moteurs (22b) chacun desquels étant associé à l'un desdits corps d'engagement (22a) ; et par le fait que ledit au moins un moteur (22b) est brushless, par le fait que ledit au moins un élément de manoeuvre (21) présente une cavité intérieure (21 a) destinée à permettre le prélèvement dudit objet par dépression.

2. Dispositif d'automatisation industrielle (1) selon une ou plusieurs des revendications précédentes, où lesdits au moins deux corps d'engagement (22a) sont à recirculation de billes.

3. Dispositif d'automatisation industrielle (1) selon une ou plusieurs des revendications précédentes, où chacun desdits groupes d'actionnement (20) définit une direction d'actionnement (20a), lesdites directions d'actionnement (20a) étant essentiellement parallèles l'une par rapport à l'autre.

4. Dispositif d'automatisation industrielle (1) selon une ou plusieurs des revendications précédentes, où ledit au moins un élément de manoeuvre (21) présente une direction de développement essentiellement rectiligne.

5. Dispositif d'automatisation industrielle (1) selon la revendication précédente, où ladite direction linéaire de développement est essentiellement parallèle à la direction de coulissement (20a).
